# EUROPEAN PATENT APPLICATION

(11) **EP 3 333 690 A2**
(43) Date of publication of application: **13.06.2018**
(21) Application number: 17205508.9
(22) Date of filing: 05.12.2017
(51) Int. Cl.: G06F 3/0482, H04M 1/725

(54) **OBJECT STARTING METHOD AND DEVICE**

(30) Priority: 09.12.2016 CN 201611130153
(71) Applicant: Beijing Xiaomi Mobile Software Co., Ltd., Beijing 100085 (CN)
(72) Inventor: LU, Yizhan, Beijing, Beijing 100085 (CN); KANG, Shangmingxue, Beijing, Beijing 100085 (CN)
(74) Representative: dompatent von Kreisler Selting Werner - Partnerschaft von Patent- und Rechtsanwälten mbB

(57) **Abstract**

The present disclosure relates to an object starting method and device, and belongs to the technical field of computers. The method includes: displaying starting entries of n objects in a predetermined desktop page, the objects being predetermined functions in one or more Applications (APPs), the starting entries being configured to trigger respective predetermined functions and the starting entries being provided by an operating system (101); receiving a first operating signal acting on one of the starting entries (102); and starting an object corresponding to said one of the starting entries through the operating system according to the first operating signal (103). According to the present disclosure, the problem of tedious operation caused by the fact that a user searches menus of the APP for the predetermined function layer by layer for starting after clicking an icon to start the APP is solved, and an effect of simplifying a starting operation of the predetermined function is achieved.

## Description

### TECHNICAL FIELD

The present disclosure generally relates to the technical field of computers, and more particularly, to an object starting method and device.

### BACKGROUND

There are multiple Applications (APPs) installed in a terminal of a user, each APP may provide multiple functions for the user to use, and how to rapidly start the APPs or the functions in the APPs becomes the focus of the user's attention.

In a related technology, when an object is an APP, a terminal makes statistics to obtain an APP frequently used by a user according to a frequency at which the APP is used by the user, and displays an icon of the APP which is frequently used in a predetermined desktop page. In this way, the user may rapidly find the icon of the APP which is frequently used from the predetermined desktop page and click the icon to start the APP. However, under many conditions, the user may frequently use a specific function in the APP. Then, the user is required to find the specific function in menus of the APP layer by layer for starting after clicking the icon to start the APP, and such an operation is tedious.

### SUMMARY

Accordingly, the present disclosure provides an object starting method and device, in accordance with claims which follow.

According to a first aspect of embodiments of the present disclosure, there is provided an object starting method, including:
displaying starting entries of n objects in a predetermined desktop page, the objects being predetermined functions in one or more APPs, the starting entries being configured to trigger respective predetermined functions and the starting entries being provided by an operating system;
receiving a first operating signal acting on one of the starting entries; and
starting an object corresponding to said one of the starting entries through the operating system according to the first operating signal.

The starting entries of the n objects are displayed in the predetermined desktop page; and when the first operating signal acting on one of the starting entries is received, since the starting entry is provided by the operating system, the object corresponding to the starting entry may be directly started through the operating system to trigger respective predetermined function, indicated by the object, in the APP, and then the user may directly start the object through the starting entry of the object displayed in the predetermined desktop page. Therefore, the problem of tedious operation caused by the fact that the user searches menus of the APP for the predetermined function layer by layer for starting after clicking an icon to start the APP is solved, and an effect of simplifying a starting operation of the predetermined function is achieved.

According to an exemplary embodiment, starting the object corresponding to said one of the starting entries through the operating system according to the first operating signal may include:
when the starting entry is configured to open a page of the object, opening the page in an intent manner through the operating system according to the first operating signal.

According to an exemplary embodiment, starting the object corresponding to said one of the starting entries through the operating system according to the first operating signal may include:
when the starting entry is configured to invoke a starting control of the object in a page of the APP, opening the page in an intent manner through the operating system according to the first operating signal, and simulating an operation of a user to invoke the starting control in the page.

According to an exemplary embodiment, the method may further include:
calculating objects to be recommended to the user for invoking according to a usage parameter of each object on a terminal or an environmental parameter of an environment where the terminal is located; and
determining starting entries of the objects as the starting entries of the objects displayed in the predetermined desktop page.

The objects to be recommended to the user for invoking are calculated according to the usage parameter of each object in the terminal or the environmental parameter of the environment where the terminal is located, and since using habits of the user for the objects may be reflected according to the usage parameters and the environmental parameter, the objects most likely to be invoked at this moment are recommended to the user, and accuracy of the recommended objects is improved.

According to an exemplary embodiment, displaying the starting entries of the n objects in the predetermined desktop page may include:
displaying the starting entries of the n objects in a desktop widget of the predetermined desktop page, each starting entry including at least one of an icon and name of one of the n objects.

According to an exemplary embodiment, displaying the starting entries of the n objects in the predetermined desktop page may include:
when the n objects include an uninstalled object and a non-uninstalled object, displaying, in the predetermined desktop page, the starting entry of the uninstalled object in a first display manner and displaying, in the predetermined desktop page, the starting entry of the non-uninstalled object in a second display manner, the first display manner being different from the second display manner.

According to an exemplary embodiment, the method may further include:
when the object corresponding to said one of the starting entries is uninstalled, displaying a first operating control and a second operating control according to the first operating signal;
when a second operating signal acting on the first operating control is received, replacing the starting entry of the object with a starting entry of another object; and
when a third operating signal acting on the second operating control is received, redownloading and reinstalling the object.

When the object corresponding to said one of the starting entries is uninstalled, if the user is not required to continue invoking the object, the starting entry of the object is replaced with a starting entry of another object, and the predetermined desktop page may directly skip to the starting entry selection list for the user to select a starting entry of another object from the starting entry selection list, so that an operation of replacing the starting entry of the object is simplified; and if the user is required to continue invoking the object, the object is redownloaded and reinstalled, and the predetermined desktop page may directly skip to a downloading page of the object, so that an operation of downloading the object is simplified.

According to an exemplary embodiment, the method may further include:
when the object corresponding to said one of the starting entries is failed to be started through the operating system, outputting prompting information, the prompting information being configured to prompt the user to replace the starting entry of the object with a starting entry of another object.

According to an exemplary embodiment, the method may further include:
acquiring a preset starting entry selection list and a preset priority list, the starting entry selection list including a starting entry of each object provided by the operating system and the priority list including priorities of starting entries of objects in the starting entry selection list;
sequentially selecting starting entries of n objects which have been installed from the starting entry selection list according to a descending order of the priorities; and
determining the starting entries of the n objects which have been installed to be the starting entries of the n objects displayed in the predetermined desktop page for the first time.

The preset starting entry selection list and priority list are acquired; the starting entries of the n objects which have been installed are sequentially selected from the starting entry selection list according to the descending order of the priorities, and since the priorities of the objects are determined according to invoking frequencies of the objects, the n objects selected according to the descending order of the priorities are objects most frequently invoked by the user, and the accuracy of the recommended object may be improved; and in addition, the n selected objects are objects which have been installed, so that the objects may be directly invoked by the user, the user is not required to download and install the objects, and object invoking efficiency may be improved.

According to an exemplary embodiment, the method may further include:
receiving a replacement instruction, the replacement instruction being configured to indicate replacing of a starting entry of an object displayed in the predetermined desktop page with a starting entry of another object;
displaying a starting entry of each object included in the starting entry selection list according to the replacement instruction;
determining a starting entry of an object selected from the starting entry selection list; and
replacing the starting entry of the object displayed in the predetermined desktop page with the starting entry of the selected object.

According to an exemplary embodiment, the method may further include:
when the selected object is not installed, displaying a third operating control; and
when a fourth operating signal acting on the third operating control is received, downloading and installing the selected object.

When the selected object is not installed, the third operating control is displayed; and when the fourth operating signal acting on the third operating control is received, the object is downloaded and installed, and in such a manner, the starting entry selection list may directly skip to the downloading page of the object, so that an APP is directly downloaded from the downloading page, and the operation of downloading the object is simplified.

According to an exemplary embodiment, displaying the starting entry of each object included in the starting entry selection list according to the replacement instruction may include:
when the starting entry selection list includes a starting entry of an object which has not been installed and a starting entry of an object which has been installed, displaying, according to the replacement instruction, the starting entry of the object which has not been installed in a third display manner and displaying, according to the replacement instruction, the starting entry of the object which has been installed in a fourth display manner, the third display manner being different from the fourth display manner.

According to a second aspect of the embodiments of the present disclosure, there is provided an object starting device, including:
a first display module configured to display starting entries of n objects in a predetermined desktop page, the objects being predetermined functions in one or more APPs, the starting entries being configured to trigger respective predetermined functions and the starting entries being provided by an operating system;
a first receiving module configured to receive a first operating signal acting on one of the starting entries displayed by the first display module; and
a starting module configured to start an object corresponding to said one of the starting entries through the operating system according to the first operating signal.

The advantages and technical effects of the device according to the invention correspond to those of the method presented above.

According to an exemplary embodiment, the starting module may further be configured to:
when the starting entry is configured to open a page of the object, open the page in an intent manner through the operating system according to the first operating signal.

According to an exemplary embodiment, the starting module may further be configured to:
when the starting entry is configured to invoke a starting control of the object in a page of the APP, open the page in the intent manner through the operating system according to the first operating signal, and simulate an operation of a user to invoke the starting control in the page.

According to an exemplary embodiment, the device may further include:
a prediction module configured to calculate objects to be recommended to the user for invoking according to a usage parameter of each object on a terminal or an environmental parameter of an environment where the terminal is located; and
a first determination module configured to determine starting entries of the objects predicted by the prediction module to be the starting entries of the objects displayed in the predetermined desktop page.

According to an exemplary embodiment, the first display module may further be configured to:
display the starting entries of the n objects in a desktop widget of the predetermined desktop page, each starting entry including at least one of an icon and name of one of the n objects.

According to an exemplary embodiment, the first display module may further be configured to:
when the n objects include an uninstalled object and a non-uninstalled object, display, in the predetermined desktop page, the starting entry of the uninstalled object in a first display manner and display, in the predetermined desktop page, the starting entry of the non-uninstalled object in a second display manner, the first display manner being different from the second display manner.

According to an exemplary embodiment, the device may further include:
a second display module configured to, when the object corresponding to said one of the starting entries is uninstalled, display a first operating control and a second operating control according to the first operating signal;
a first processing module configured to, when a second operating signal acting on the first operating control displayed by the second display module is received, replace the starting entry of the object with a starting entry of another object; and
a second processing module configured to, when a third operating signal acting on the second operating control displayed by the second display module is received, redownload and reinstall the object.

According to an exemplary embodiment, the device may further include:
an output module configured to, when the object corresponding to said one of the starting entries is failed to be started through the operating system, output prompting information, the prompting information being configured to prompt the user to replace the starting entry of the object with a starting entry of another object.

According to an exemplary embodiment, the device may further include:
an acquisition module configured to acquire a preset starting entry selection list and a preset priority list, the starting entry selection list including a starting entry of each object provided by the operating system and the priority list including priorities of starting entries of objects in the starting entry selection list;
a selection module configured to sequentially select the starting entries of n objects which have been installed from the starting entry selection list acquired by the acquisition module according to a descending order of the priorities; and
a second determination module configured to determine the starting entries of the n objects which have been installed to be the starting entries of the n objects displayed in the predetermined desktop page for the first time.

According to an exemplary embodiment, the device may further include:
a second receiving module configured to receive a replacement instruction, the replacement instruction being configured to indicate replacing of a starting entry of an object displayed in the predetermined desktop page with a starting entry of another object;
a third display module configured to display a starting entry of each object included in the starting entry selection list according to the replacement instruction received by the second receiving module;
a third determination module configured to determine a starting entry of an object selected from the starting entry selection list; and
a replacement module configured to replace the starting entry of the object displayed in the predetermined desktop page with the starting entry of the selected object.

According to an exemplary embodiment, the device may further include:
a fourth display module configured to, when the selected object is not installed, display a third operating control; and
a third processing module configured to, when a fourth operating signal acting on the third operating control displayed by the fourth display module is received, download and install the selected object.

According to an exemplary embodiment, the fourth display module may further be configured to:
when the starting entry selection list includes a starting entry of an object which has not been installed and a starting entry of an object which has been installed, display, according to the replacement instruction, the starting entry of the object which has not been installed in a third display manner and display, according to the replacement instruction, the starting entry of the object which has been installed in a fourth display manner, the third display manner being different from the fourth display manner.

According to a third aspect of the embodiments of the present disclosure, there is provided an object starting device, including:
a processor; and
a memory configured to store an instruction executable by the processor,
wherein the processor may be configured to:
display starting entries of n objects in a predetermined desktop page, the objects being predetermined functions in one or more APPs, the starting entries being configured to trigger respective predetermined functions and the starting entries being provided by an operating system;
receive a first operating signal acting on one of the starting entries; and
start an object corresponding to said one of the starting entries through the operating system according to the first operating signal.

In one particular embodiment, the steps of the object starting are determined by computer program instructions.

Consequently, according to a fourth aspect, the disclosure is also directed to a computer program for executing the steps of an object starting method as described above when this program is executed by a computer.

This program can use any programming language and take the form of source code, object code or a code intermediate between source code and object code, such as a partially compiled form, or any other desirable form.

The disclosure is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing an object starting method according to an exemplary embodiment.
Fig. 2 is a flow chart showing an object starting method according to another exemplary embodiment.
Fig. 3 is a schematic diagram illustrating a predetermined desktop page, according to another exemplary embodiment.
Fig. 4 is a schematic diagram illustrating selection of a desktop widget, according to another exemplary embodiment.
Fig. 5 is a schematic diagram illustrating prompting information, according to another exemplary embodiment.
Fig. 6 is a first schematic diagram illustrating a starting entry selection list, according to another exemplary embodiment.
Fig. 7 is a schematic diagram illustrating selection of an APP, according to another exemplary embodiment.
Fig. 8 is a second schematic diagram illustrating a starting entry selection list, according to another exemplary embodiment.
Fig. 9 is a schematic diagram illustrating regulation of starting entries, according to another exemplary embodiment.
Fig. 10 is a flow chart showing an object starting method according to another exemplary embodiment.
Fig. 11 is a schematic diagram illustrating starting entries of objects, according to another exemplary embodiment.
Fig. 12 is a block diagram of an object starting device according to an exemplary embodiment.
Fig. 13 is a block diagram of an object starting device according to an exemplary embodiment.
Fig. 14 is a block diagram of an object starting device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Rather, they are merely examples of apparatuses and methods consistent with aspects related to the present disclosure as recited in the appended claims.

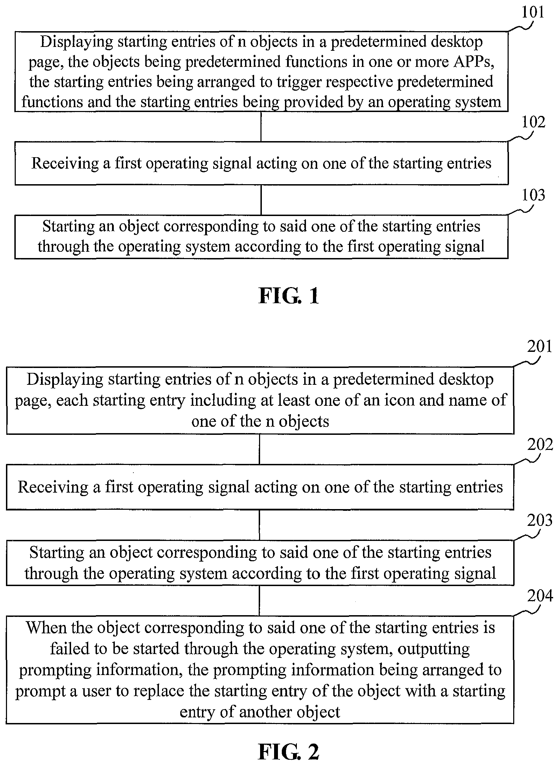

Fig. 1 is a flow chart showing an object starting method according to an exemplary embodiment. The object starting method is applied to a terminal, and as shown in Fig. 1, the object starting method includes the following steps.

In Step 101, displaying starting entries of n objects in a predetermined desktop page, the objects being predetermined functions in one or more APPs, the starting entries being configured to trigger respective predetermined functions and the starting entries being provided by an operating system.

In Step 102, receiving a first operating signal acting on one of the starting entries.

In Step 103, starting an object corresponding to said one of the starting entries through the operating system according to the first operating signal.

From the above, according to the object starting method provided by the present disclosure, the starting entries of the n objects are displayed in the predetermined desktop page; and when the first operating signal acting on one of the starting entries is received, since the starting entry is provided by the operating system, the object corresponding to the starting entry may be directly started through the operating system to trigger respective predetermined function, indicated by the object, in the APP, and then a user may directly start the object through the starting entry of the object displayed in the predetermined desktop page. Therefore, the problem of tedious operation caused by the fact that the user searches menus of the APP for the predetermined function layer by layer for starting after clicking an icon to start the APP is solved, and an effect of simplifying a starting operation of the predetermined function is achieved.

Fig. 2 is a flow chart showing an object starting method according to another exemplary embodiment. The object starting method is applied to a terminal, and as shown in Fig. 2, the object starting method includes the following steps.

In Step 201, displaying starting entries of n objects in a desktop widget of a predetermined desktop page, each starting entry including at least one of an icon and name of one of the n objects.

Each object is a predetermined function in an APP. For example, when the APP is a payment APP, the object may be a scanning function and payment code function in the payment APP; when the APP is a note APP, the object may be a note creation function in the note APP; when the APP is an Instant Messaging (IM) APP, the object may be a payment code function and party AA function in the IM APP; and when the APP is a microblog APP, the object may be a my microblog function in the microblog function. There are no limits made to the objects in the embodiment.

Optionally, the objects may also be APPs.

When the objects are the predetermined functions in the APP, the starting entries are configured to trigger respective predetermined functions, and the starting entries are provided by an operating system. In the embodiment, the operating system may determine a starting manner of each object and generate the starting entry of the object according to the starting manner. For example, when an object is a page, the operating system determines that a starting manner of the object is invoking Activity corresponding to the page, and then the operating system determines a invoking entry of the Activity to be a starting entry of the object. When the object is a function in the page, the operating system determines that the starting manner of the object is invoking the Activity corresponding to the page and invoking a starting control corresponding to the function in the page, and then the operating system determines the invoking entry of the Activity to be the starting entry of the object, and correspondingly records an operating manner of invoking the starting control in the page to invoke the starting control in such an operating manner in the page.

After the operating system generates the starting entry of the object, the terminal is required to display the starting entry. If the invoking entry of the Activity is directly displayed as the starting entry, since a user may not directly identify the corresponding object according to the invoking entry of the Activity, the operating system may also optionally acquire identification information of the object, associate the invoking entry of the Activity with the identification information and display the associated identification information as the starting entry. In such a manner, when an operation of the user acts on the identification information, the operating system may acquire the invoking entry, associated with the identification information, of the Activity and invoke the invoking entry of the Activity, thereby achieving a purpose of starting the object, wherein the identification information includes at least one of an icon and name of one of the n objects.

If the identification information includes the icon of the object, when the icon of the object is preset in the APP, the icon in the identification information may be consistent with the icon preset in the APP, so that the user may identify the object. At this moment, the operating system may read the icon of the object from the APP and determine the icon as the icon in the identification information. If the icon of the object is not preset in the APP, the user identify the object through the name of the object, at this moment, a developer may draw an icon including the name of the object and preset the icon in the operating system, and the operating system determines the icon as the icon in the identification information; or, the developer may draw an icon configured to represent a predetermined function realized by the object and preset the icon in the operating system, and the operating system determines the icon as the icon in the identification information.

If the identification information includes the name of the object, since the name of the object is preset in the APP, the operating system may read the name of the object from the APP and determine the name as the name in the identification information.

In the embodiment, the terminal may display the starting entries in the desktop widget of the predetermined desktop page. The predetermined desktop page is a desktop created by the terminal to display the desktop widget, an ordinary desktop page which is commonly referred to is a desktop created by the terminal to display an APP icon, and the predetermined desktop page is different from the ordinary desktop page, wherein the predetermined desktop page is also referred to as HiBoard, and at this moment, the desktop widget is also referred to as a desktop bookmark.

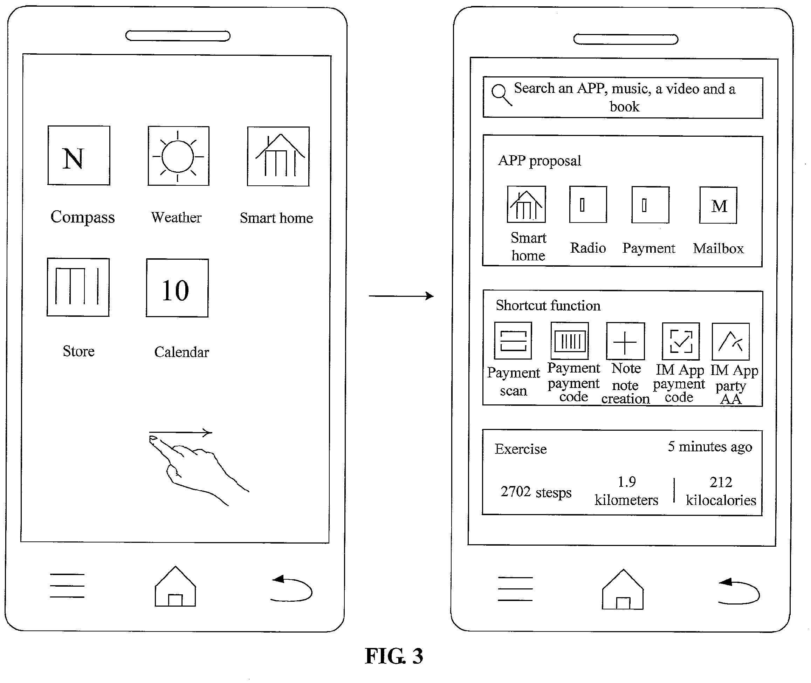

Referring to a schematic diagram illustrating the predetermined desktop page in Fig. 3, the left view is an ordinary desktop page on a leftmost side of the terminal; and when the user executes a rightward swiping operation in a blank area of the ordinary desktop page, the terminal displays the predetermined desktop page, i.e. the right view in Fig. 3.

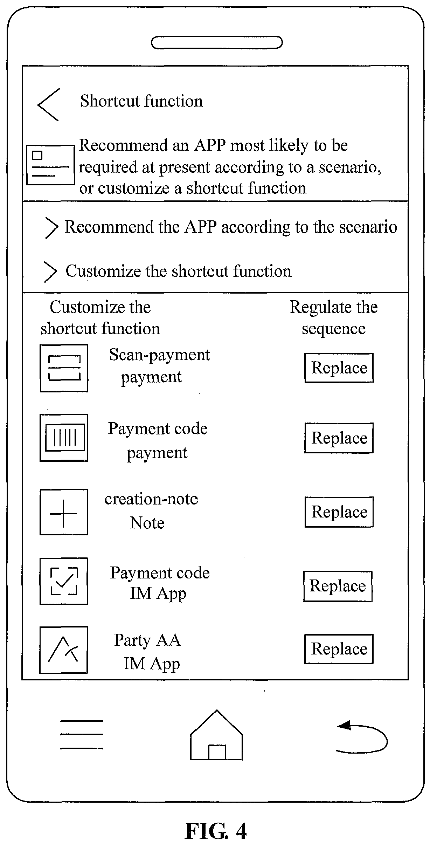

In the right view in Fig. 3, the desktop widget of the predetermined desktop page includes "search box", "APP proposal", "shortcut function" and "exercise", and during practical implementation, the predetermined desktop page may not include part of the desktop widgets, or, includes part of desktop widgets not shown in Fig. 3, which is not limited in the embodiment. For example, referring to a schematic diagram illustrating selection of the desktop widget in Fig. 4, "APP proposal" is configured to recommend an APP which may be invoked by the user according to a scenario, "shortcut function" is configured to recommend an object which may be invoked by the user, and they have similar uses, so that the terminal may provide an option for the user to select whether to display "APP proposal" or display "shortcut function"; when the user selects an option "recommend APPs according to scenarios" corresponding to "APP proposal", the terminal displays "APP proposal" in the predetermined desktop page, and does not display "shortcut function"; and when the user selects an option "customize shortcut functions" corresponding to "shortcut function", the terminal displays "shortcut function" in the predetermined desktop page, and does not display "APP proposal".

In the right view in Fig. 3, "shortcut function" displays starting entries of 5 objects, and during practical implementation, a number of starting entries of objects displayed in the desktop widget is not limited in the embodiment.

Before the starting entries of the objects are displayed, the terminal is also required to select the objects. Two object selection manners are provided in the embodiment, and the two selection manners will be introduced below respectively.

In the first selection manner, the terminal acquires invoking frequencies of most users for each object, determines a priority of each object according to the invoking frequencies and selects the objects according to the priorities. That is, the terminal acquires a preset starting entry selection list and a preset priority list, the starting entry selection list including a starting entry of each object provided by the operating system and the priority list including priorities of starting entries of objects in the starting entry selection list; the starting entries of n objects which have been installed are sequentially selected from the starting entry selection list according to a descending order of the priorities; and the starting entries of the n objects which have been installed are determined to be the starting entries of the n objects displayed in the predetermined desktop page for the first time.

The starting entry selection list includes starting entries of multiple objects, and the terminal may arrange the starting entries of the multiple objects according to a preset rule. For example, an arrangement sequence specified by the preset rule is: an object of a system APP type, an object of a third-party APP type, an object of a third-party APP type which is not installed or uninstalled, and an APP. When an APP type includes multiple APPs, the APPs may be sequenced according to Pinyin of names of the multiple APPs; and when an APP includes multiple objects, the objects may be sequenced according to Pinyin of names of the multiple objects.

It is important to note that: when an object is a predetermined function in the APP, that the object is installed refers to that the APP to which the object belongs is installed.

If the priorities of the objects included in the priority list sequentially are from high to low: note-note creation, IM APP-my card, IM APP-scan, payment-payment code, microblog-my microblog, calendar-calendar creation, sound recorder-start recording sounds, scan-scan to translate and calculator-scientific calculator, and n is 5, when the IM APP is not installed in the terminal, the 5 selected objects are respectively note-note creation, payment-payment code, microblog-my microblog, calendar-calendar creation and sound recorder-start recording sounds; when the payment APP is not installed in the terminal, the 5 selected objects are respectively note-note creation, IM APP-my card, IM APP-scan, microblog-my microblog and calendar-calendar creation; and when the IM APP and the payment APP are not installed in the terminal, the 5 selected objects are respectively note-note creation, microblog-my microblog, calendar-calendar creation, sound recorder-start recording sounds and scan-scan to translate.

Since the priorities of the objects are determined according to the invoking frequencies of the objects, the n objects selected according to the descending order of the priorities are objects most frequently invoked by the user, and accuracy of a recommended object may be improved; and in addition, the n selected objects are objects which have been installed, so that the objects may be directly invoked by the user, the user is not required to download and install the objects, and object invoking efficiency may be improved.

In the second selection manner, the terminal acquires the invoking frequencies of the user of the terminal for the objects, and selects the objects according to the invoking frequencies. That is, the terminal calculates objects to be recommended to the user for invoking according to a usage parameter of each object in the terminal or an environmental parameter of an environment where the terminal is located; and starting entries of the objects are determined to be the starting entries of the objects displayed in the predetermined desktop page.

The usage parameters may be total invoking frequencies or total invoking time lengths of the objects, and may also be invoking frequencies or invoking time lengths within a period of time, which will not be limited in the embodiment.

After acquiring the usage parameter of each object, the terminal may sequence each object according to a sequence from large to small usage parameters and select the objects configured at the first n positions as objects to be recommended to the user for invoking. For example, when the usage parameters are invoking frequencies in a month, the terminal record the invoking frequency of each object in the month, sequences each object according to a sequence from high to low invoking sequences, and selects the objects configured at the first 5 positions as objects to be recommended to the user for invoking.

The environmental parameter may be a current moment, a current position and a parameter of a predetermined item in a space where the terminal is located, which will not be limited in the embodiment, wherein the predetermined item may be air quality, a humidity, a temperature, luminance and the like.

The terminal may pre-record environmental parameters when the user invokes the objects, acquire a current environmental parameter and select the objects matched with the current environmental parameter as the objects to be recommended to the user for invoking. For example, when the environmental parameter is the current moment, if the user buy lunch with the payment code function at twelve every day, the terminal selects the payment code function as an object to be recommended to the user for invoking if the current moment is twelve; and if the user takes a taxi to a certain place with a taxing function at five every Thursday, the terminal selects the taxing function as an object to be recommended to the user for invoking when the current moment is five on Thursday. For another example, when the environmental parameter is the current position, if the user turns on a television with a television function of a smart home APP after getting back home every day, the terminal selects the television function as an object to be recommended to the user for invoking when the current position is home. For example, when the environmental parameter is the air quality, if detecting that the air quality is relatively poor with a weather APP, the terminal selects a purifier function of a smart home function as an object to be recommended to the user for invoking; and when the environmental parameter is the temperature, if detecting that a room temperature is relatively lower through a temperature sensor, the terminal selects an air conditioning function of the smart home function as an object to be recommended to the user for invoking.

Since using habits of the user for the objects may be reflected according to the usage parameters and the environmental parameter, the objects most likely to be invoked at this moment are recommended to the user, and the accuracy of the recommended objects is improved.

In Step 202, receiving a first operating signal acting on one of the starting entries.

The first operating signal may be generated by a starting entry clicking operation of the user.

In Step 203, starting an object corresponding to said one of the starting entries through an operating system according to the first operating signal.

The object may be a page, and may also be a function in the page, starting manners of the page and the function in the page are different, and the terminal is required to select different starting manners according to different objects. Two starting manners will be described below respectively.

In the first starting manner, when the starting entry is configured to open the page of the object, the terminal opens the page in an intent manner through the operating system according to the first operating signal.

The operating system may invoke a invoking entry of Activity corresponding to the page in the intent manner and open the page by starting the Activity.

In the second starting manner, when the starting entry is configured to invoke a starting control of the object in a page of the APP, the terminal opens the page in the intent manner through the operating system according to the first operating signal, and simulates an operation of the user to invoke the starting control in the page.

The operating system may invoke the invoking entry of the Activity corresponding to the page in the intent manner and open the page by starting the Activity; and the operating system determines the starting control of the object in the page, simulates the operation of the user to click the starting control and invokes the corresponding function through the starting control. For example, when the object is a wavelet video function in the IM APP, the operating system may invoke a page where a wavelet video control is located and then simulate clicking of the wavelet video control in the page to start the wavelet video function.

It is important to note that: when the operating system simulates the operation of the user to invoke the starting control at a relatively high speed, the user may not be aware about that the terminal displays the page. That is, the user may see the object being started after operating the starting entry of the object.

Wherein, before the operating system clicks the starting control, it is also required to determine a position of the starting control in the page. Three determination manners are provided in the embodiment, and the three determination manners will be introduced below respectively.

In the first determination manner, the operating system identifies characters in the page, and determines the position of the starting control according to the characters. For example, when the starting control of the object is the wavelet video control, the operating system may identify characters "wavelet video" in the page and determine the position where the characters are located to be the position where the starting control is located.

In the second determination manner, coordinate information of the position where the starting control is located is prestored in the terminal, and the operating system may read the coordinate information, determine a position indicated by the coordinate information in the page and determine the position to be the position where the starting control is located.

In the third determination manner, an Identifier (ID) of the starting control is prestored in the terminal, and the operating system may read the ID, search the page for a position corresponding to the ID and determine the position to be the position where the starting control is located.

In Step 204, when the object corresponding to said one of the starting entries is failed to be started through the operating system, outputting prompting information, the prompting information being configured to prompt a user to replace the starting entry of the object with a starting entry of another object.

When the object is updated, the page where the object is located may be deleted, and at this moment, the operating system cannot open the page where the object is located, thereby causing an object starting failure. The operating system may output the prompting information when the object corresponding to said one of the starting entries is failed to be started, and the user replaces the starting entry of the object with a starting entry of another object according to the prompting information.

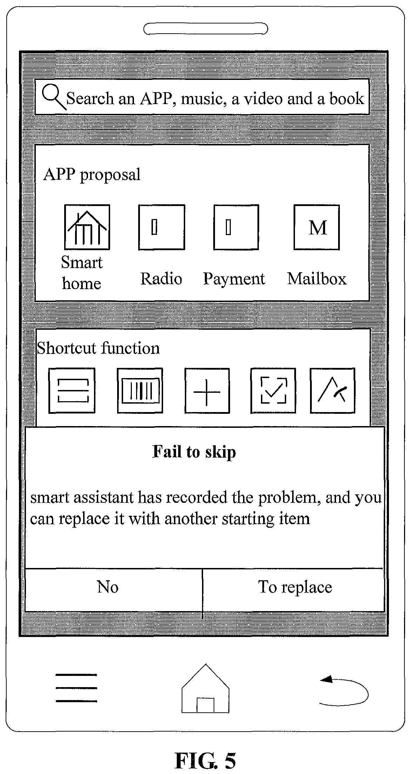

Referring to a schematic diagram illustrating the prompting information in Fig. 5, when the user clicks a "to replace" option, the terminal displays the starting entry selection list, and the user may directly select a starting entry of another object to replace the starting entry of the object failed to be started from the starting entry selection list, so that an operation of replacing the starting entry of the object may be simplified.

Optionally, after the starting entry of the object is displayed in the predetermined desktop page, the user may also replace the starting entry of the object. That is, the terminal receives a replacement instruction, the replacement instruction being configured to indicate replacing of a starting entry of an object displayed in the predetermined desktop page with a starting entry of another object; a starting entry of each object included in the starting entry selection list is displayed according to the replacement instruction; a starting entry of an object selected from the starting entry selection list is determined; and the starting entry of the object displayed in the predetermined desktop page is replaced with the starting entry of the selected object.

Referring to Fig. 4, where each object corresponds to a "replace" option, when being intended to replace a certain object, the user may click the "replace" option corresponding to the object, the terminal displays the starting entry selection list, and the user may select a replacement object from the starting entry selection list.

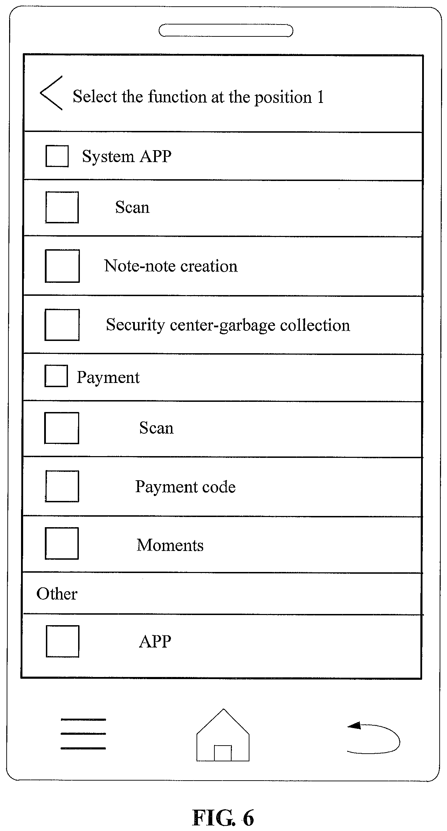

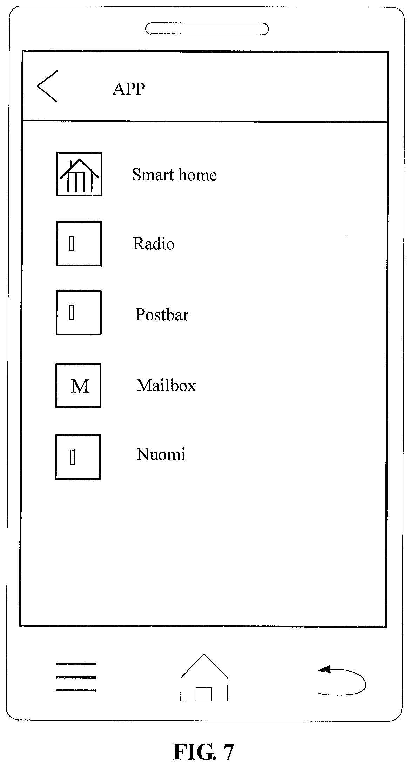

Referring to a first schematic diagram illustrating the starting entry selection list in Fig. 6, Fig. 6 is described with the condition that the user is intended to replace the object at a position 1 as an example. If being intended to select a predetermined function in an APP, the user may select an object in a system APP bar and a payment bar. If being intended to select the APP, the user may select the APP in another bar, referring to a schematic diagram illustrating selection of the APP in Fig. 7 at this moment, and multiple APPs are displayed for the user to select in Fig. 7.

In the embodiment, the starting entry selection list includes a starting entry of an object which has been installed, and further includes a starting entry of an object which has not been installed, the terminal is required to display the starting entries of the two objects in different display manners for the user to distinguish. That is, displaying the starting entry of each object included in the starting entry selection list according to the replacement instruction includes: when the starting entry selection list includes the starting entry of the object which has not been installed and the starting entry of the object which has been installed, displaying, according to the replacement instruction, the starting entry of the object which has not been installed in a third display manner and displaying, according to the replacement instruction, the starting entry of the object which has been installed in a fourth display manner, the third display manner being different from the fourth display manner.

For example, the terminal displays the starting entries of the two objects in different font colors, or, displays the starting entries of the two objects in different fonts, or, displays the starting entries of the two objects in different background colors, or displays the starting entries of the two objects in bold and non-bold manners, or, displays the starting entries of the two objects with different transparencies, and the like, which will not be limited in the embodiment.

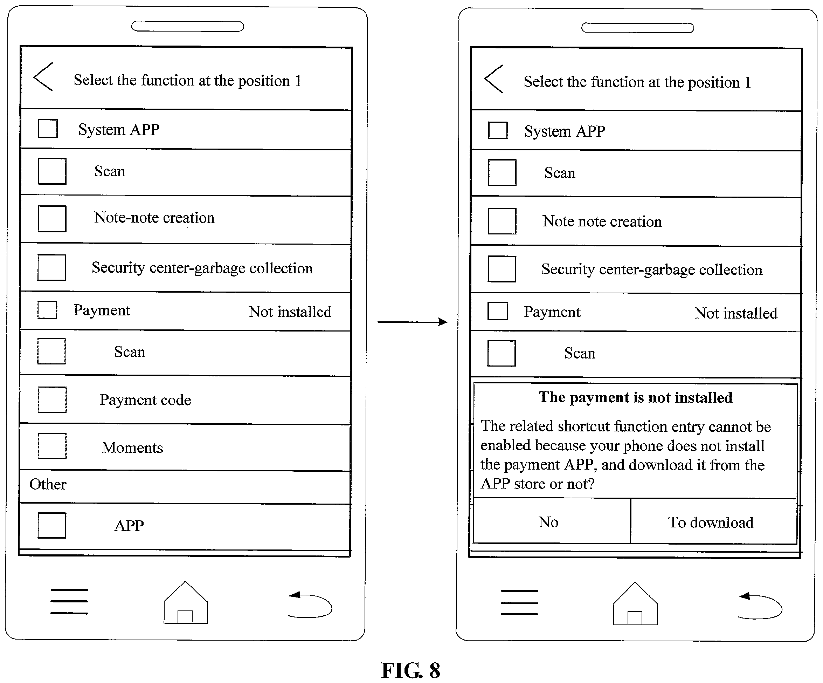

Referring to a second schematic diagram illustrating the starting entry selection list in Fig. 8, in the left view of Fig. 8, the starting entry of the object which has been installed is displayed in black font, and the starting entry of the object which has not been installed is displayed in gray font. Optionally, the terminal may also display text information "not installed" at a corresponding position of the object which has not been installed.

Optionally, the method provided by the embodiment further includes: when the selected object is not installed, displaying a third operating control; and when a fourth operating signal acting on the third operating control is received, downloading and installing the object.

Referring to the right view in Fig. 8, when the user clicks a "to download" option, the terminal directly skips from the starting entry selection list to a downloading page of the object, and the user may directly download an APP from the downloading page, so that an operation of downloading the object may be simplified.

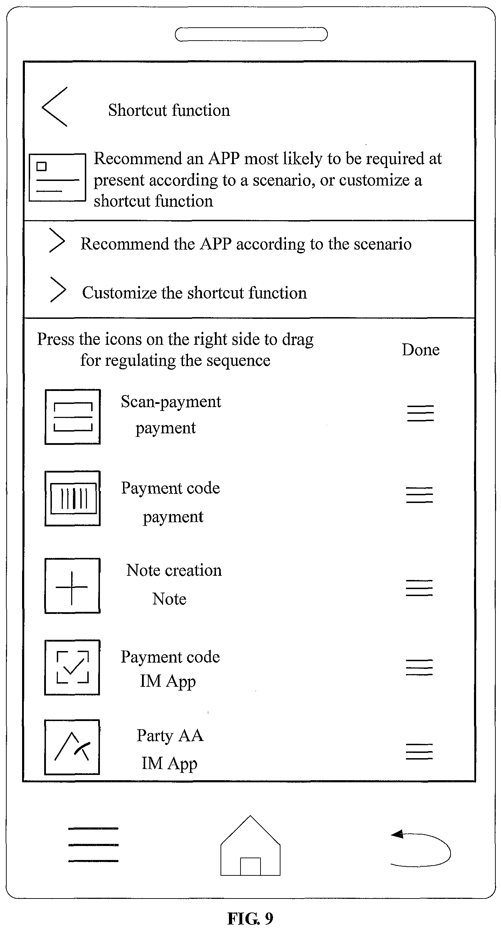

Optionally, the user may also regulate the sequence of the starting entries of the objects displayed in the predetermined desktop page. Referring to Fig. 4, a "regulate the sequence" option is also displayed in Fig. 4. When the user clicks the "regulate the sequence" option, referring to a schematic diagram illustrating regulation of the starting entries in Fig. 9, the "replace" option of each object is changed into a "≡" option, and the user may regulate the display sequence of the starting entries of the objects by dragging the "≡" options. For example, the user presses the "≡" of "payment code" and drags it to a position of "scan", and the terminal displays "scan" at a position 1 and displays "payment code" at a position 2.

From the above, according to the object starting method provided by the present disclosure, the starting entries of the n objects are displayed in the predetermined desktop page; and when the first operating signal acting on one of the starting entries is received, since the starting entry is provided by the operating system, the object corresponding to the starting entry may be directly started through the operating system to trigger respective predetermined function, indicated by the object, in the APP, and then the user may directly start the object through the starting entry of the object displayed in the predetermined desktop page. Therefore, the problem of tedious operation caused by the fact that the user searches menus of the APP for the predetermined function layer by layer for starting after clicking an icon to start the APP is solved, and an effect of simplifying a starting operation of the predetermined function is achieved.

The objects to be recommended to the user for invoking are calculated according to the usage parameter of each object in the terminal or the environmental parameter of the environment where the terminal is located, and since using habits of the user for the objects may be reflected according to the usage parameters and the environmental parameter, the objects most likely to be invoked at this moment are recommended to the user, and the accuracy of the recommended objects is improved.

The preset starting entry selection list and priority list are acquired; the starting entries of the n objects which have been installed are sequentially selected from the starting entry selection list according to the descending order of the priorities, and since the priorities of the objects are determined according to invoking frequencies of the objects, the n objects selected according to the descending order of the priorities are objects most frequently invoked by the user, and the accuracy of the recommended object may be improved; and in addition, the n selected objects are objects which have been installed, so that the objects may be directly invoked by the user, the user is not required to download and install the objects, and object invoking efficiency may be improved.

When the selected object is not installed, the third operating control is displayed; and when the fourth operating signal acting on the third operating control is received, the object is downloaded and installed, and in such a manner, the starting entry selection list may directly skip to the downloading page of the object, so that the APP is directly downloaded from the downloading page, and the operation of downloading the object is simplified.

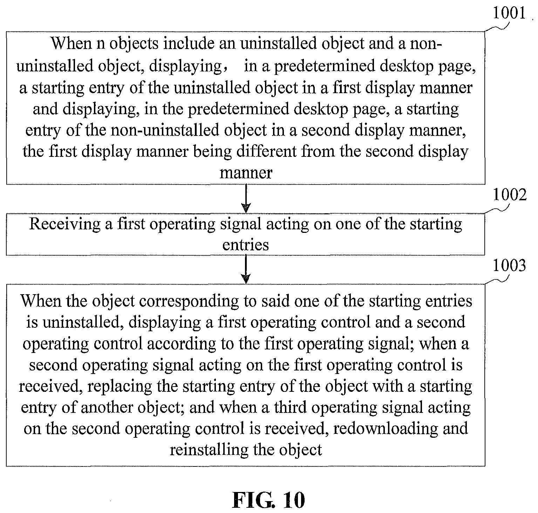

In a terminal using process of a user, an object may be uninstalled, and at this moment, a flow chart showing an object starting method in Fig. 10 is referred to. The object starting method is applied to a terminal, and as shown in Fig. 10, the object starting method includes the following steps.

In Step 1001, when n objects include an uninstalled object and a non-uninstalled object, in a predetermined desktop page, displaying a starting entry of the uninstalled object in a first display manner and displaying a starting entry of the non-uninstalled object in a second display manner, the first display manner being different from the second display manner.

Detailed contents about the starting entries refer to descriptions in Step 201, and will not be elaborated herein.

When the n objects include the uninstalled object and the non-uninstalled object, the terminal is also required to display the starting entries of the two objects in different display manners for the user to distinguish. For example, the terminal displays the starting entries of the two objects in different colors, or, displays the starting entries of the two objects in different fonts, or, displays the starting entries of the two objects in different background colors, or, displays the starting entries of the two objects in bold and non-bold manners, or, displays the starting entries of the two objects with different transparencies, and the like, which will not be limited in the embodiment.

It is important to note that: when an object is a predetermined function in an APP, that the object is uninstalled refers to that the APP to which the object belongs is uninstalled.

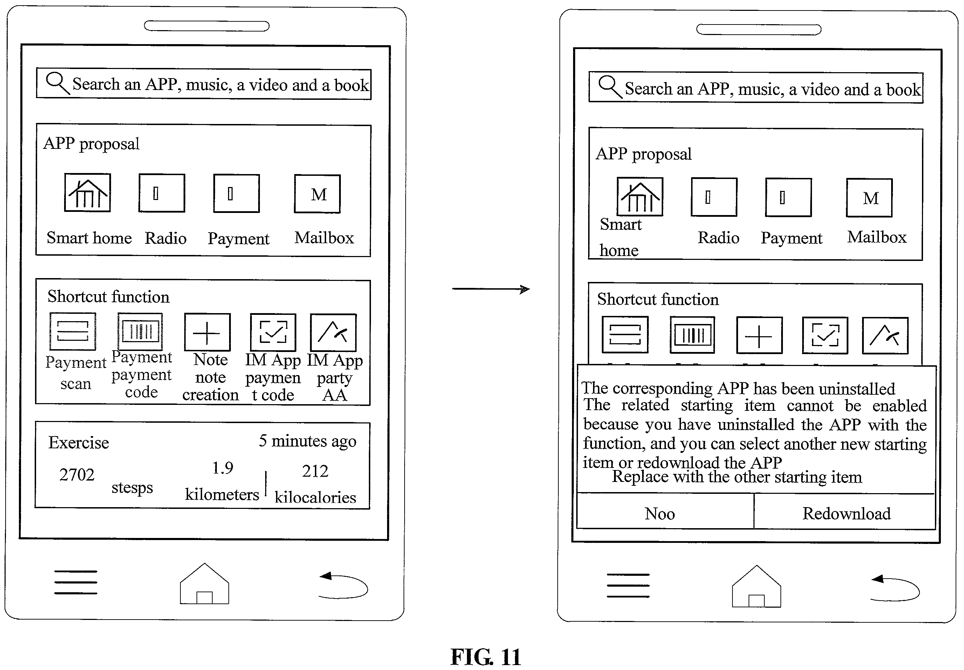

Referring to a schematic diagram illustrating the starting entries of the objects in Fig. 11, where a payment APP has been uninstalled by the user, and in the left view in Fig. 11, icons and names of a scan function and payment code function in the payment APP are semitransparent, and a note creation function in a non-uninstalled note APP and a payment code function and party AA function in a non-uninstalled IM APP may all be normally displayed.

In Step 1002, receiving a first operating signal acting on one of the starting entries.

The first operating signal may be generated by a starting entry clicking operation of the user.

In Step 1003, when the object corresponding to said one of the starting entries is uninstalled, displaying a first operating control and a second operating control according to the first operating signal; when a second operating signal acting on the first operating control is received, replacing the starting entry of the object with a starting entry of another object; and when a third operating signal acting on the second operating control is received, redownloading and reinstalling the object.

When the user clicks the scan function or payment code function in the payment APP, referring to the right view in Fig. 11, the first operating control displayed by the terminal is a "replace with another starting item" option, and the second operating control is a "redownload" option. When the user clicks the "replace with another starting item" option, the terminal receives the second operating signal, and the displays a starting entry selection list, and the user may directly select a starting entry of another object from the starting entry selection list to replace the starting entry of the uninstalled object, so that an operation of replacing the starting entry of the object may be simplified. When the user clicks the "redownload" option, the terminal receives the third operating signal, and directly skips from the starting entry selection list to a downloading page of the object, and the user may directly download an APP from the downloading page, so that an operation of downloading the object may be simplified.

When the object corresponding to said one of the starting entries is uninstalled, if the user is not required to continue invoking the object, the starting entry of the object is replaced with a starting entry of another object, and the predetermined desktop page may directly skip to the starting entry selection list for the user to select a starting entry of another object from the starting entry selection list, so that the operation of replacing the starting entry of the object is simplified; and if the user is required to continue invoking the object, the object is redownloaded and reinstalled, and the predetermined desktop page may directly skip to a downloading page of the object, so that the operation of downloading the object is simplified.

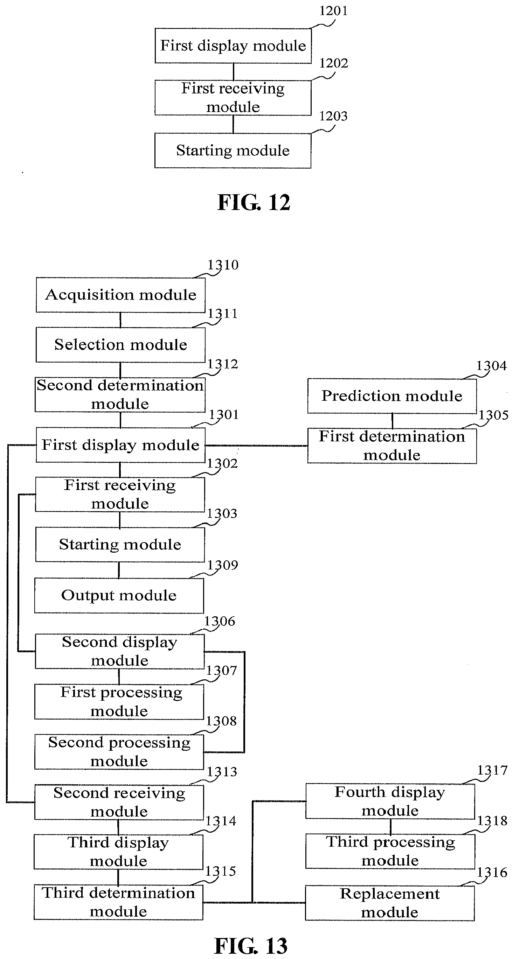

Fig. 12 is a block diagram of an object starting device according to an exemplary embodiment. The object starting device is applied to a terminal, and as shown in Fig. 12, the object starting device includes: a first display module 1201, a first receiving module 1202 and a starting module 1203.

The first display module 1201 is configured to display starting entries of n objects in a predetermined desktop page, the objects being predetermined functions in one or more APPs, the starting entries being configured to trigger respective predetermined functions and the starting entries being provided by an operating system.

The first receiving module 1202 is configured to receive a first operating signal acting on one of the starting entries displayed by the first display module 1201.

The starting module 1203 is configured to start an object corresponding to said one of the starting entries through the operating system according to the first operating signal.

From the above, according to the object starting device provided by the present disclosure, the starting entries of the n objects are displayed in the predetermined desktop page; and when the first operating signal acting on one of the starting entries is received, since the starting entry is provided by the operating system, the object corresponding to the starting entry may be directly started through the operating system to trigger respective predetermined function, indicated by the object, in the APP, and then a user may directly start the object through the starting entry of the object displayed in the predetermined desktop page. Therefore, the problem of tedious operation caused by the fact that the user searches menus of the APP for the predetermined function layer by layer for starting after clicking an icon to start the APP is solved, and an effect of simplifying a starting operation of the predetermined function is achieved.

Fig. 13 is a block diagram of an object starting device according to an exemplary embodiment. The object starting device is applied to a terminal, and as shown in Fig. 13, the object starting device includes: a first display module 1301, a first receiving module 1302 and a starting module 1303.

The first display module 1301 is configured to display starting entries of n objects in a predetermined desktop page, the objects being predetermined functions in one or more APPs, the starting entries being configured to trigger respective predetermined functions and the starting entries being provided by an operating system.

The first receiving module 1302 is configured to receive a first operating signal acting on one of the starting entries displayed by the first display module 1301.

The starting module 1303 is configured to start an object corresponding to said one of the starting entries through the operating system according to the first operating signal.

Optionally, the starting module 1303 is further configured to:
when the starting entry is configured to open a page of the object, open the page in an intent manner through the operating system according to the first operating signal.

Optionally, the starting module 1303 is further configured to:
when the starting entry is configured to invoke a starting control of the object in a page of the APP, open the page in the intent manner through the operating system according to the first operating signal, and simulate an operation of a user to invoke the starting control in the page.

Optionally, the device further includes: a prediction module 1304 and a first determination module 1305.

The prediction module 1304 is configured to calculate objects to be recommended to the user for invoking according to a usage parameter of each object on a terminal or an environmental parameter of an environment where the terminal is located.

The first determination module 1305 is configured to determine starting entries of the objects predicted by the prediction module 1304 to be the starting entries of the objects displayed in the predetermined desktop page.

Optionally, the first display module 1301 is further configured to:
display the starting entries of the n objects in a desktop widget of the predetermined desktop page, each starting entry including at least one of an icon and name of one of the n objects.

Optionally, the first display module 1301 is further configured to:
when the n objects include an uninstalled object and a non-uninstalled object, display, in the predetermined desktop page, the starting entry of the uninstalled object in a first display manner and display, in the predetermined desktop page, the starting entry of the non-uninstalled object in a second display manner, the first display manner being different from the second display manner.

Optionally, the device further includes: a second display module 1306, a first processing module 1307 or a second processing module 1308.

The second display module 1306 is configured to, when the object corresponding to said one of the starting entries is uninstalled, display a first operating control and a second operating control according to the first operating signal.

The first processing module 1307 is configured to, when a second operating signal acting on the first operating control displayed by the second display module is received, replace the starting entry of the object with a starting entry of another object.

The second processing module 1308 is configured to, when a third operating signal acting on the second operating control displayed by the second display module is received, redownload and reinstall the object.

Optionally, the device further includes: an output module 1309.

The output module 1309 is configured to, when the object corresponding to said one of the starting entries is failed to be started through the operating system, output prompting information, the prompting information being configured to prompt the user to replace the starting entry of the object with a starting entry of another object.

Optionally, the device further includes: an acquisition module 1310, a selection module 1311 and a second determination module 1312.

The acquisition module 1310 is configured to acquire a preset starting entry selection list and a preset priority list, the starting entry selection list including a starting entry of each object provided by the operating system and the priority list including priorities of starting entries of objects in the starting entry selection list.

The selection module 1311 is configured to sequentially select the starting entries of n objects which have been installed from the starting entry selection list acquired by the acquisition module 1310 according to a descending order of the priorities.

The second determination module 1312 is configured to determine the starting entries of the n objects which have been installed to be the starting entries of the n objects displayed in the predetermined desktop page for the first time.

Optionally, the device further includes: a second receiving module 1313, a third display module 1314, a third determination module 1315 and a replacement module 1316.

The second receiving module 1313 is configured to receive a replacement instruction, the replacement instruction being configured to indicate replacing of a starting entry of an object displayed in the predetermined desktop page a starting entry of another object.

The third display module 1314 is configured to display a starting entry of each object included in the starting entry selection list according to the replacement instruction received by the second receiving module 1313.

The third determination module 1315 is configured to determine a starting entry of an object selected from the starting entry selection list.

The replacement module 1316 is configured to replace the starting entry of the object displayed in the predetermined desktop page with the starting entry of the selected object.

Optionally, the device further includes: a fourth display module 1317 and a third processing module 1318.

The fourth display module 1317 is configured to, when the selected object is not installed, display a third operating control.

The third processing module 1318 is configured to, when a fourth operating signal acting on the third operating control displayed by the fourth display module 1317 is received, download and install the selected object.

Optionally, the fourth display module 1317 is further configured to:
when the starting entry selection list includes a starting entry of an object which has not been installed and a starting entry of an object which has been installed, display, according to the replacement instruction, the starting entry of the object which has not been installed in a third display manner and display, according to the replacement instruction, the starting entry of the object which has been installed in a fourth display manner, the third display manner being different from the fourth display manner.

From the above, according to the object starting device provided by the present disclosure, the starting entries of the n objects are displayed in the predetermined desktop page; and when the first operating signal acting on one of the starting entries is received, since the starting entry is provided by the operating system, the object corresponding to the starting entry may be directly started through the operating system to trigger respective predetermined function, indicated by the object, in the APP, and then the user may directly start the object through the starting entry of the object displayed in the predetermined desktop page. Therefore, the problem of tedious operation caused by the fact that the user searches menus of the APP for the predetermined function layer by layer for starting after clicking an icon to start the APP is solved, and an effect of simplifying a starting operation of the predetermined function is achieved.

The objects to be recommended to the user for invoking are calculated according to the usage parameter of each object in the terminal or the environmental parameter of the environment where the terminal is located, and since using habits of the user for the objects may be reflected according to the usage parameters and the environmental parameter, the objects most likely to be invoked at this moment are recommended to the user, and the accuracy of the recommended objects is improved.

When the object corresponding to said one of the starting entries is uninstalled, if the user is not required to continue invoking the object, the starting entry of the object is replaced with a starting entry of another object, and the predetermined desktop page may directly skip to the starting entry selection list for the user to select a starting entry of another object from the starting entry selection list, so that an operation of replacing the starting entry of the object is simplified; and if the user is required to continue invoking the object, the object is redownloaded and reinstalled, and the predetermined desktop page may directly skip to a downloading page of the object, so that an operation of downloading the object is simplified.

The preset starting entry selection list and priority list are acquired; the starting entries of the n objects which have been installed are sequentially selected from the starting entry selection list according to the descending order of the priorities, and since the priorities of the objects are determined according to invoking frequencies of the objects, the n objects selected according to the descending order of the priorities are objects most frequently invoked by the user, and the accuracy of the recommended object may be improved; and in addition, the n selected objects are objects which have been installed, so that the objects may be directly invoked by the user, the user is not required to download and install the objects, and object invoking efficiency may be improved.

When the selected object is not installed, the third operating control is displayed; and when the fourth operating signal acting on the third operating control is received, the object is downloaded and installed, and in such a manner, the starting entry selection list may directly skip to the downloading page of the object, so that the APP is directly downloaded from the downloading page, and the operation of downloading the object is simplified.

With respect to the device in the above embodiment, the specific manners for performing operations for individual modules therein have been described in detail in the embodiment regarding the method, which will not be elaborated herein.

An exemplary embodiment of the present disclosure provides an object starting device, which may implement the object starting method provided by the present disclosure, the object starting device including: a processor and a memory configured to store an instruction executable by the processor,
wherein the processor is configured to:
display starting entries of n objects in a predetermined desktop page, the objects being predetermined functions in one or more APPs, the starting entries being configured to trigger respective predetermined functions and the starting entries being provided by an operating system;
receive a first operating signal acting on one of the starting entries; and
start an object corresponding to said one of the starting entries through the operating system according to the first operating signal.

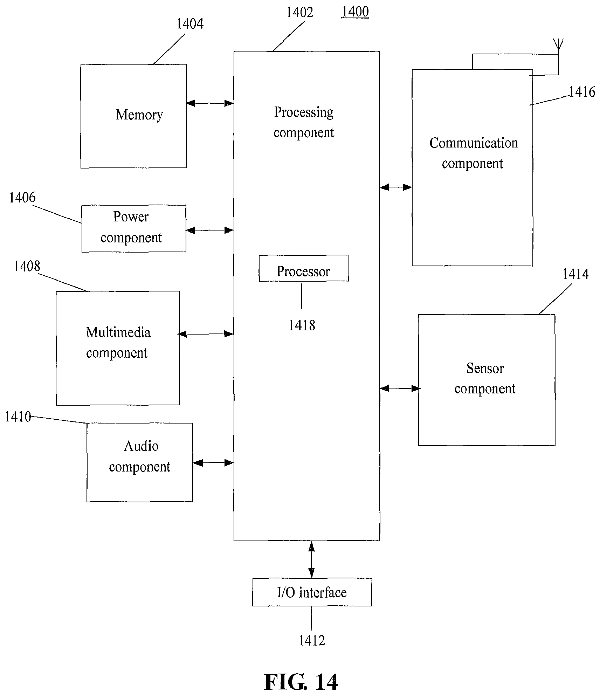

Fig. 14 is a block diagram of an object starting device 1400, according to an exemplary embodiment. For example, the device 1400may be a mobile phone, a computer, a digital broadcast terminal, a messaging device, a gaming console, a tablet, a medical device, exercise equipment, a personal digital assistant and the like.

Referring to Fig. 14, the device 1400 may include one or more of the following components: a processing component 1402, a memory 1404, a power component 1406, a multimedia component 1408, an audio component 1410, an Input/Output (I/O) interface 1412, a sensor component 1414, and a communication component 1416.

The processing component 1402 typically controls overall operations of the device 1400, such as the operations associated with display, telephone calls, data communications, camera operations, and recording operations. The processing component 1402 may include one or more processors 1418 to execute instructions to perform all or part of the steps in the abovementioned method. Moreover, the processing component 1402 may include one or more modules which facilitate interaction between the processing component 1402 and the other components. For instance, the processing component 1402 may include a multimedia module to facilitate interaction between the multimedia component 1408 and the processing component 1402.

The memory 1404 is configured to store various types of data to support the operation of the device 1400. Examples of such data include instructions for any APPs or methods operated on the device 1400, contact data, phonebook data, messages, pictures, video, etc. The memory 1404 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1406 provides power for various components of the device 1400. The power component 1406 may include a power management system, one or more power supplies, and other components associated with the generation, management and distribution of power for the device 1400.

The multimedia component 1408 includes a screen providing an output interface between the device 1400 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a duration and pressure associated with the touch or swipe action. In some embodiments, the multimedia component 1408 includes a front camera and/or a rear camera. The front camera and/or the rear camera may receive external multimedia data when the device 1400 is in an operation mode, such as a photographing mode or a video mode. Each of the front camera and the rear camera may be a fixed optical lens system or have focusing and optical zooming capabilities.

The audio component 1410 is configured to output and/or input an audio signal. For example, the audio component 1410 includes a Microphone (MIC), and the MIC is configured to receive an external audio signal when the device 1400 is in the operation mode, such as a call mode, a recording mode and a voice recognition mode. The received audio signal may be further stored in the memory 1404 or sent through the communication component 1416. In some embodiments, the audio component 1410 further includes a speaker configured to output the audio signal.

The I/O interface 1412 provides an interface between the processing component 1402 and a peripheral interface module, and the peripheral interface module may be a keyboard, a click wheel, a button and the like. The button may include, but not limited to: a home button, a volume button, a starting button and a locking button.

The sensor component 1414 includes one or more sensors configured to provide status assessment in various aspects for the device 1400. For instance, the sensor component 1414 may detect an on/off status of the device 1400 and relative positioning of components, such as a display and small keyboard of the device 1400, and the sensor component 1414 may further detect a change in a position of the device 1400 or a component of the device 1400, presence or absence of contact between the user and the device 1400, orientation or acceleration/deceleration of the device 1400 and a change in temperature of the device 1400. The sensor component 1414 may include a proximity sensor configured to detect presence of an object nearby without any physical contact. The sensor component 1414 may also include a light sensor, such as a Complementary Metal Oxide Semiconductor (CMOS) or Charge Coupled Device (CCD) image sensor configured for use in an imaging application. In some embodiments, the sensor component 1414 may also include an acceleration sensor, a gyroscope sensor, a magnetic sensor, a pressure sensor or a temperature sensor.

The communication component 1416 is configured to facilitate wired or wireless communication between the device 1400 and other equpment. The device 1400 may access a communication-standard-based wireless network, such as a Wireless Fidelity (WiFi) network, a 2nd-Generation (2G) or 3rd-Generation (3G) network or a combination thereof. In an exemplary embodiment, the communication component 1416 receives a broadcast signal or broadcast associated information from an external broadcast management system through a broadcast channel. In an exemplary embodiment, the communication component 1416 further includes a Near Field Communciation (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a Bluetooth (BT) technology and another technology.

In an exemplary embodiment, the device 1400 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method.

In an exemplary embodiment, there is also provided a non-transitory computer-readable storage medium including an instruction, such as the memory 1404 including an instruction, and the instruction may be executed by the processor 1418 of the device 1400 to implement the abovementioned method. For example, the non-transitory computer-readable storage medium may be a ROM, a Random Access Memory (RAM), a Compact Disc Read-Only Memory (CD-ROM), a magnetic tape, a floppy disc, optical data storage equipment and the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. An object starting device, comprising:
a first display module (1201, 1301) configured to display starting entries of n objects in a predetermined desktop page, the objects being predetermined functions in one or more Applications, APPs, the starting entries being configured to trigger respective predetermined functions and the starting entries being provided by an operating system;
a first receiving module (1202, 1302) configured to receive a first operating signal acting on one of the starting entries displayed by the first display module (1201, 1301); and
a starting module (1203, 1303) configured to start an object corresponding to said one of the starting entries through the operating system according to the first operating signal.

2. The device of claim 1, wherein the starting module (1203, 1303) is further configured to:
when the starting entry is configured to open a page of the object, open the page in an intent manner through the operating system according to the first operating signal.

3. The device of claim 1, wherein the starting module (1203, 1303) is further configured to:
when the starting entry is configured to invoke a starting control of the object in a page of the APP, open the page in the intent manner through the operating system according to the first operating signal, and simulate an operation of a user to invoke the starting control in the page.

4. The device of any one of claims 1-3, further comprising:
a prediction module (1304) configured to calculate objects to be recommended to the user for invoking according to a usage parameter of each object on a terminal or an environmental parameter of an environment where the terminal is located; and
a first determination module (1305) configured to determine starting entries of the objects predicted by the prediction module (1304) as the starting entries of the objects displayed in the predetermined desktop page.

5. The device of any one of claims 1-4, wherein the first display module (1201, 1301) is further configured to:
display the starting entries of the n objects in a desktop widget of the predetermined desktop page, each starting entry comprising at least one of an icon and name of one of the n objects.

6. The device of any one of claims 1-5, wherein the first display module (1201, 1301) is further configured to:
when the n objects comprise an uninstalled object and a non-uninstalled object, display, in the predetermined desktop page, the starting entry of the uninstalled object in a first display manner and display, in the predetermined desktop page, the starting entry of the non-uninstalled object in a second display manner, the first display manner being different from the second display manner.

7. The device of any one of claims 1-6, further comprising:
a second display module (1306) configured to, when the object corresponding to said one of the starting entries is uninstalled, display a first operating control and a second operating control according to the first operating signal;
a first processing module (1307) configured to, when a second operating signal acting on the first operating control displayed by the second display module (1306) is received, replace the starting entry of the object with a starting entry of another object; and
a second processing module (1308) configured to, when a third operating signal acting on the second operating control displayed by the second display module (1306) is received, redownload and reinstall the object.

8. The device of any one of claims 1-7, further comprising:
an output module (1309) configured to, when the object corresponding to said one of the starting entries is failed to be started through the operating system, output prompting information, the prompting information being configured to prompt the user to replace the starting entry of the object with a starting entry of another object.

9. The device of any one of claims 1-8, further comprising:
an acquisition module (1310) configured to acquire a preset starting entry selection list and a preset priority list, the starting entry selection list comprising a starting entry of each object provided by the operating system and the priority list comprising priorities of starting entries of objects in the starting entry selection list;
a selection module (1311) configured to sequentially select the starting entries of n objects which have been installed from the starting entry selection list acquired by the acquisition module (1310) according to a descending order of the priorities; and
a second determination module (1312) configured to determine the starting entries of the n objects which have been installed to be the starting entries of the n objects displayed in the predetermined desktop page for the first time.

10. The device of any one of claims 1-9, further comprising:
a second receiving module (1313) configured to receive a replacement instruction, the replacement instruction being configured to indicate replacing of a starting entry of an object displayed in the predetermined desktop page with a starting entry of another object;
a third display module (1314) configured to display a starting entry of each object comprised in the starting entry selection list according to the replacement instruction received by the second receiving module (1313);
a third determination module (1315) configured to determine a starting entry of an object selected from the starting entry selection list; and
a replacement module (1316) configured to replace the starting entry of the object displayed in the predetermined desktop page with the starting entry of the selected object.

11. The device of claim 10, further comprising:
a fourth display module (1317) configured to, when the selected object is not installed, display a third operating control; and
a third processing module (1318) configured to, when a fourth operating signal acting on the third operating control displayed by the fourth display module (1317) is received, download and install the selected object.

12. The device of claim 10 or 11, wherein the fourth display module (1317) is further configured to:
when the starting entry selection list comprises a starting entry of an object which has not been installed and a starting entry of an object which has been installed, display, according to the replacement instruction, the starting entry of the object which has not been installed in a third display manner and display, according to the replacement instruction, the starting entry of the object which has been installed in a fourth display manner, the third display manner being different from the fourth display manner.

13. An object starting device, comprising:
a processor; and
a memory configured to store an instruction executable by the processor,
wherein the processor is configured to:
display starting entries of n objects in a predetermined desktop page, the objects being predetermined functions in one or more Applications, APPs, the starting entries being configured to trigger respective predetermined functions and the starting entries being provided by an operating system;
receive a first operating signal acting on one of the starting entries; and
start an object corresponding to said one of the starting entries through the operating system according to the first operating signal.

14. An object starting method, comprising:
displaying starting entries of n objects in a predetermined desktop page, the objects being predetermined functions in one or more Applications, APPs, the starting entries being configured to trigger respective predetermined functions and the starting entries being provided by an operating system (101);
receiving a first operating signal acting on one of the starting entries (102); and
starting an object corresponding to one of the starting entries through the operating system according to the first operating signal (103).

15. A computer program including instructions for executing the steps of an object starting method according to claim 1 when said program is executed by a computer.
